# EUROPÄISCHE PATENTSCHRIFT

(11) **EP 1 400 273 B1**
(45) Veröffentlichungstag und Bekanntmachung des Hinweises auf die Patenterteilung: **05.12.2007**
(21) Anmeldenummer: 03015051.0
(22) Anmeldetag: 03.07.2003
(51) Int. Cl.: B01D 46/52

(54) **Filtereinsatz**
Filter insert
Élément de filtration

(30) Priorität: 23.09.2002 DE 10244309
(43) Veröffentlichungstag der Anmeldung: 24.03.2004
(73) Patentinhaber: Carl Freudenberg KG, 69469 Weinheim (DE)
(72) Erfinder: Felber, Uwe, 69518 Abtsteinach (DE); Häfner, Uwe, 69469 Weinheim (DE)

(56) Entgegenhaltungen:
- EP-A- 0 810 352
- EP-B- 0 649 335
- DE-A- 4 202 769
- US-A- 5 902 361

## Beschreibung

### Technisches Gebiet

Die Erfindung betrifft eine Filteranordnung mit einem Gehäuse oder Gehäuseschacht und einem im wesentlichen plattenförmigen Filtereinsatz, der in das Gehäuse einsetzbar bzw. in den Gehäuseschacht einführbar ist und eine im wesentlichen zick-zack-förmig gefaltete Filterbahn aus einem Filterwerkstoff, insbesondere Vliesstoff, umfasst, wobei in dem Gehäuse bzw. Gehäuseschacht Aufnahmen zur Halterung und/oder Abdichtung der stirnseitigen Endabschnitte der Filterbahn vorgesehen sind.

### Stand der Technik

Filtereinsätze mit einem Filterelement mit zick-zack-förmig gefalteter Filterbahn aus einem Filterwerkstoff werden für die verschiedensten Anwendungszwecke hergestellt. Beispielsweise werden sie zum Filtrieren von Frischluft für den Innenraum eines Kraftfahrzeugs benutzt. Diese Filtereinsätze werden im Kraftfahrzeug in entsprechende Filtergehäuse eingesetzt, wobei gewisse Anforderungen hinsichtlich der Abdichtung der Filter gegenüber der Gehäusewandung bestehen. Filtereinsätze müssen in der Regel in regelmäßigen Zeitabständen ausgewechselt werden, da mit zunehmender Belegung des Filterelements mit Staub und Partikeln die Filterleistung merklich nachlässt.

Eine Filteranordnung der eingangs beschriebenen Art ist aus der EP 0 649 335 B1 bekannt. Die bekannte Filteranordnung umfasst einen im wesentlichen plattenförmigen Filtereinsatz aus einer zick-zack-förmig gefalteten Filterbahn aus einem Filterwerkstoff und ein Längs- und Querseiten aufweisendes Gehäuse, in welches der Filtereinsatz einsetzbar ist. Um den Materialverbrauch beim Auswechseln eines verbrauchten Filters möglichst gering zu halten, sind der Filtereinsatz und das Gehäuse so ausgebildet, dass der Filtereinsatz in das Gehäuse frei einsetzbar und frei herausnehmbar ist. Mit dieser Anordnung soll ermöglicht werden, bei Verschmutzung den Filtereinsatz alleine, d. h. ohne das Gehäuse, auswechseln zu können. Zum Abdichten des Filtereinsatzes in dem Gehäuse sind gemäß der EP 0 649 335 B1 im Bereich der Gehäusequerseiten Aufnahmen für die beiden stirnseitigen Endabschnitte der Filterbahn vorgesehen. In einer bevorzugten Ausführungsform der Erfindung umfassen diese Aufnahmen im Gehäuse im Bereich der Querseiten angeordnete Laschen, die bei eingesetztem Filtereinsatz die Falten in den weiter aussen liegenden Endabschnitten der Filterbahm wenigstens teilweise untergreifen. In einer weiteren bevorzugten Ausführungsform ist der Abstand zwischen den Laschen und der Gehäusewandung an der Querseite etwas geringer gewählt als die Dicke des Filterbahnmaterials, so dass das Filterbahnmaterial zwischen Lasche und Wandung leicht angepresst wird, wodurch die Fixierung des Filtereinsatzes im Gehäuse unterstützt werden soll. Im übrigen wird der Filtereinsatz gemäß der EP 0 649 335 B1 durch den Anpressdruck des durchströmenden, zu filternden Mediums im Gehäuse gehalten.

Nachteilig an der bekannten Filteranordnung ist, dass der Filtereinsatz lediglich im eingebauten Zustand und nur bei Vorhandensein eines durchströmenden Mediums sicher in dem Gehäuse fixiert ist.

### Darstellung der Erfindung

Aufgabe der Erfindung ist, eine Filteranordnung der eingangs beschriebenen Art so weiterzubilden, dass der Filtereinsatz im Bedarfsfall leicht und ohne Aufwand auswechselbar ist, gleichzeitig aber auch in jedem Einbauzustand und unabhängig vom Anpressdruck eines durchströmenden Mediums sicher und abdichtend im Gehäuse fixiert ist. Diese Aufgabe wird gelöst mit einer Filteranordnung mit allen Merkmalen des Patentanspruchs 1. Vorteilhafte Ausgestaltungen der Erfindung sind in den Unteransprüchen beschrieben.

Gemäß der Erfindung ist bei einer Filteranordnung mit einem Gehäuse oder Gehäuseschacht und einem im wesentlichen plattenförmigen Filtereinsatz, der in das Gehäuse einsetzbar bzw. in den Gehäuseschacht einführbar ist und eine im wesentlichen zick-zack-förmig gefaltete Filterbahn aus einem Filterwerkstoff, insbesondere Vliesstoff, umfasst, wobei in dem Gehäuse bzw. Gehäuseschacht Aufnahmen zur Halterung und/oder Abdichtung der stirnseitigen Endabschnitte der Filterbahn vorgesehen sind, wenigstens einer der beiden stirnseitigen Endabschnitte der Filterbahn als horizontaler Faltenauslauf ausgebildet und die zugeordnete Aufnahme umfasst eine V-förmige Öffnung zum Einführen des horizontalen Faltenauslaufs.

Damit sind in einfacher Weise eine sichere Fixierung und Abdichtung des Filtereinsatzes im Gehäuse oder Gehäuseschacht, unabhängig vom Einbauzustand und vom Vorhandensein eines Anpressdrucks eines durchströmenden Mediums, sowie ein einfaches Auswechseln bei Verschmutzung gewährleistet. Die vorliegende Erfindung bringt insbesondere auch bei solchen Filterplatten Vorteile, die im gebogenen Zustand in einem Gehäuseschacht montiert werden. Dadurch, dass der horizontale Faltenauslauf in die V-förmige Aufnahme eingesteckt werden kann, werden auch solche Filterplatten im Gehäuseschacht sicher gehalten und gegen die Gehäusewandung abgedichtet. Generell hat die vorliegende Erfindung bei Filterplatten, die durch Einführen in einen Gehäuseschacht montiert werden, den Vorteil, dass stirnseitig keinerlei zusätzliche Bauteile für die Abdichtung vorgesehen werden müssen. Damit vereinfacht sich der Aufbau. Hieraus resultieren unter anderem Kostenvorteile.

Ein Filtereinsatz mit seitlich abstehenden Enden des Filterbahnmaterials ist zwar aus der DE 42 02 769 A1 bekannt, diese ragen jedoch an der oberen Gehäusekante jeweils seitlich nach aussen und dienen lediglich als Griffstücke, um den Filtereinsatz aus dem Gehäuse herausnehmen zu können. Das Gehäuse weist bei der bekannten Anordnung folglich auch keinerlei Aufnahmen für die seitlich abstehenden Enden auf. Eine Fixierung und Abdichtung des Filtereinsatzes im Gehäuse durch die seitlich überstehenden Enden des Filterbahnmaterials ist bei dieser bekannten Filteranordnung nicht gegeben.

Im einfachsten Fall entspricht die Länge der Filterbahn mit horizontalem Faltenauslauf in etwa dem Abstand zwischen den inneren Scheitelpunkten der V-förmigen Aufnahmen. Die Abdichtfunktion lässt sich jedoch dadurch verbessern, dass die Länge der Faltenbahn etwas größer gewählt wird, so dass sich der Filtereinsatz im Gehäuse mit seinen horizontal auslaufenden Enden unter elastischer Vorspannung in den Öffnungsschlitzen anlegt. Gemäß der Erfindung kann die Filterbahn nur an einer der beiden Stirnseiten mit einem horizontalen Faltenauslauf versehen sein. Wegen der einfacheren Montage sind vorzugsweise jedoch beide stirnseitigen Endabschnitte der Filterbahn und die zugeordneten Aufnahmen im Gehäuse gemäß der Erfindung ausgebildet.

Das Einsetzen bzw. Auswechseln des erfindungsgemäßen Filtereinsatzes ist sehr einfach. Dadurch, dass der Filtereinsatz zumindest an seinen horizontal auslaufenden Enden elastisch verbiegbar ist, kann beispielsweise bei einem von oben in ein Gehäuse einsetzbaren Filtereinsatz zuerst das eine Ende des Filtereinsatzes in die V-förmige Öffnung der ersten Aufnahme und dann das andere Ende unter leichtem Verbiegen des horizontalen Faltenauslaufs in die gegenüberliegende V-förmige Öffnungen der anderen Aufnahme eingeführt werden. Analoges gilt auch für das Einführen eines Filtereinsatzes in einen Gehäuseschacht, wobei die Montage besonders vereinfacht wird, wenn eine der beiden Gehäusewandungen mit einer V-förmigen Aufnahme durch den Deckel des Gehäuses gebildet wird. In diesem Fall wird beispielsweise nach Einführen des ersten horizontalen Endabschnitts der Faltenbahn in die an der der Einführöffnung gegenüberliegenden Gehäusewandung angeordneten ersten Aufnahme der am anderen Ende der Faltenbahn befindliche zweite horizontale Faltenauslauf beim Aufsetzen des Deckels in die zugeordnete Aufnahme am Gehäusedeckel eingesteckt.

In einer bevorzugten Ausführungsform der Erfindung ist der horizontale Faltenauslauf mittig an der Stirnseite des Filtereinsatzes angeordnet. Durch diesen symmetrischen Aufbau kann der Filtereinsatz verdrehsicher eingebaut werden. Es gibt keine Vorzugsrichtung.

Andererseits kann es auch vorteilhaft sein, eine Zwangsdurchströmungsrichtung vorzugeben und zu diesem Zweck den horizontalen Faltenauslauf an der Stirnseite in einem oberen oder unteren Bereich anzuordnen.

In einer weiteren bevorzugten Ausführungsform der Erfindung ist der horizontale Faltenauslauf mittels eines aufgebrachten Streifens, beispielsweise aus einem voluminösen Vliesstoff, verstärkt. Dies hat den Vorteil, dass die Abdichtung und Arretierung des Filtereinsatzes im Gehäuse oder Gehäuseschacht noch verbessert wird.

Die vorliegende Erfindung kann auf Filtereinsätze aus beliebigen Filterwerkstoffen Anwendung finden. Vorzugsweise besteht die Filterbahn jedoch aus Vliesstoff. Die Filterbahn kann ein- oder mehrlagig ausgebildet sein. Sie kann beispielsweise eine Partikel- und eine Aktivkohlefilterlage umfassen.

Weiterhin kann die erfindungsgemäße Filteranordnung überall da Anwendung finden, wo ein Luftstrom von schädlichen Luftinhaltsstoffen gereinigt werden soll, insbesondere in Geräten zum Klimatisieren von Räumen, wobei sowohl mobile als auch stationäre Anwendungen denkbar sind. Besonders bevorzugt wird eine erfindungsgemäße Filteranordnung in einer Klimaanlage für ein Kraftfahrzeug eingesetzt.

Nachfolgend wird die Erfindung anhand der Figuren näher erläutert.

Es zeigen:
- Figur 1:: in schematischer seitlicher Schnittdarstellung eine Teilansicht eines erfindungsgemäßen Filtereinsatzes mit horizontalem Faltenauslauf an der Plattenunterseite;
- Figur 2:: in schematischer seitlicher Schnittdarstellung eine Teilansicht eines erfindungsgemäßen Filtereinsatzes mit mittig angeordnetem horizontalem Faltenauslauf;
- Figur 3:: in schematischer seitlicher Schnittdarstellung eine Teilansicht eines erfindungsgemäßen Filtereinsatzes gemäß Fig. 1 mit V-förmiger Aufnahme;
- Figur 4:: in schematischer seitlicher Schnittdarstellung eine Teilansicht eines erfindungsgemäßen Filtereinsatzes gemäß Fig. 2 mit V-förmiger Aufnahme;
- Figur 5: in schematischer seitlicher Schnittdarstellung eine erfindungsgemäße Filteranordnung mit Gehäuseschacht;
- Figur 6: in schematischer seitlicher Schnittdarstellung eine erfindungsgemäße Filteranordnung mit gebogenem Filtereinsatz.

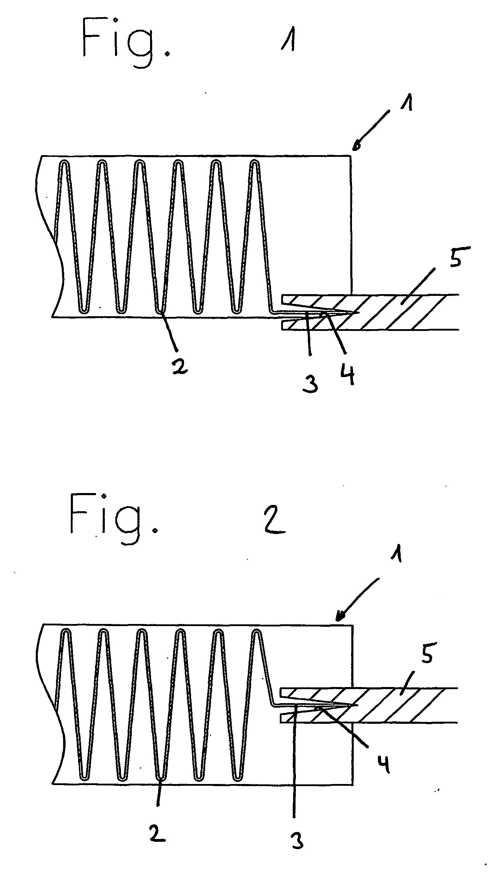

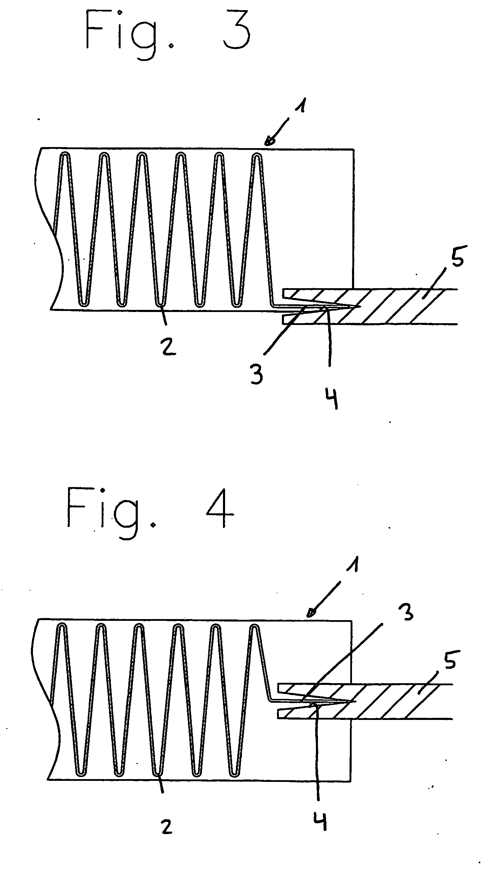

Man erkennt in Fig. 1 einen Filtereinsatz 1 mit einer Faltenbahn 2 mit horizontalem Faltenauslauf 3 im Bereich der Plattenunterseite. Fig. 2 zeigt einen erfindungsgemäßen Filtereinsatz 1 mit mittig angordnetem horizontalen Faltenauslauf. Während bei der Ausführungsform in Fig. 1 eine Durchströmungsrichtung vorgegeben ist, ist die Variante in Fig. 2 verdrehsicher. Die Fig. 3 und 4 zeigen die Filtereinsätze 1 aus den Figuren 1 und 2, wobei jeweils der horizontale Faltenauslauf 3 in eine entsprechende V-förmige Öffnung 4 einer Aufnahme 5, die sich an einem in den Figuren nicht dargestellten Gehäuse befindet, eingesteckt ist. Die Filtereinsätze 1 sind dadurch gegen ein Herausfallen aus dem Gehäuse gesichert, unabhängig davon, ob ein solcher Filtereinsatz 1 eingebaut ist oder nicht, und unabhängig von dem Vorhandensein eines Anpressdrucks eines durchströmenden Mediums. Gleichzeitig ist durch den eingesteckten horizontalen Faltenauslauf 3 eine gute Abdichtung des Filtereinsatzes 1 gegenüber der Gehäusewandung gewährleistet. Andererseits ist ein erfindungsgemäßer Filtereinsatz durch einfaches Biegen, beispielsweise des horizontalen Faltenauslaufs 3, aus dem Gehäuse herausnehmbar. Ein Filterwechsel ist dadurch leicht möglich.

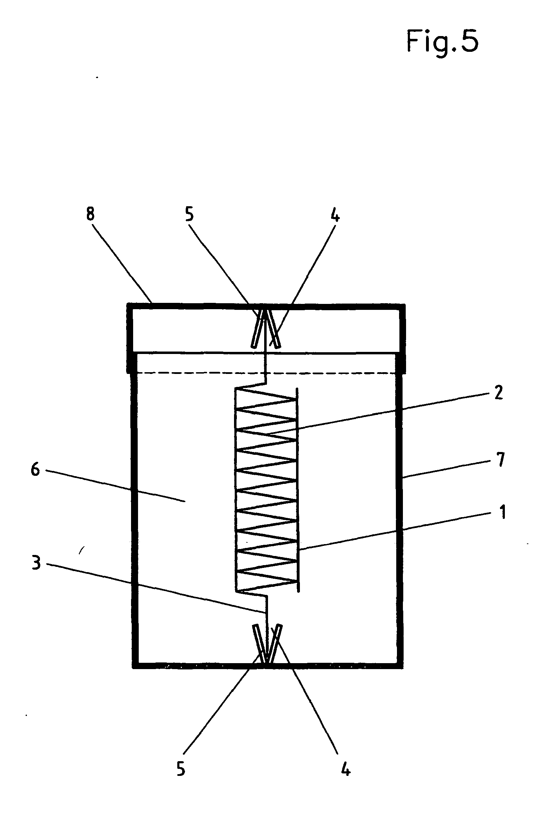

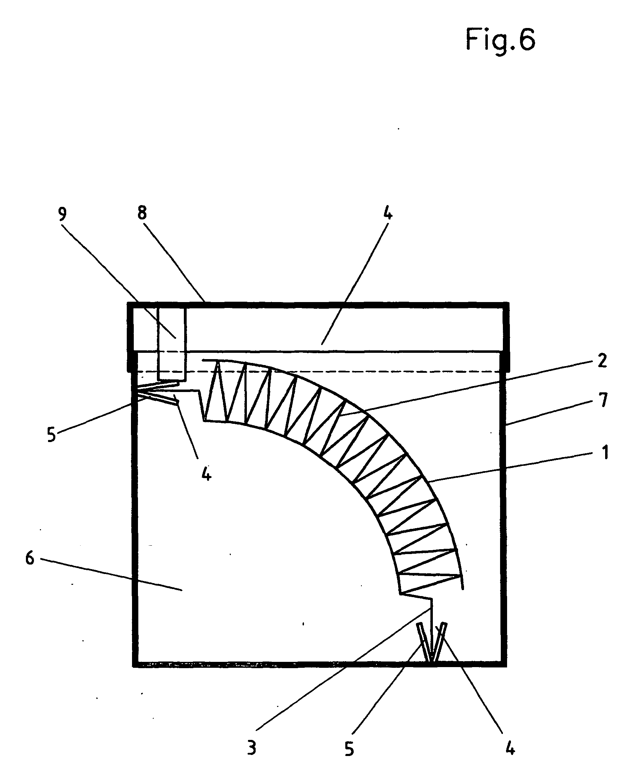

In den Fign. 5 und 6 ist ein eine erfindungsgemäße Filteranordnung mit in den Schacht 6 eines Gehäuses 7 eingesetztem Filtereinsatz 1 dargestellt. Man erkennt in Fig. 5, dass eine der beiden V-förmigen Aufnahmen am Deckel 8 des Gehäuses 6 montiert ist. Das Einführen des Filtereinsatzes 1 wird dadurch erheblich vereinfacht. Der Filtereinsatz 1 wird bei der Montage vorerst mit dem horizontalen Faltenauslauf 3 in die untere V-förmige Aufnahme 5 eingesteckt.

Anschließend wird der Gehäusedeckel 8 aufgesetzt, wodurch der gegenüberliegende horizontale Faltenauslauf 3 in die obere V-förmige Aufnahme 5 eingeführt wird.

Bei der in Fig. 6 dargestellten Ausführungsform ist der Filtereinsatz um 90° gekrümmt. Die obere Schenkel der V-förmigen Aufnahme 5 wird bei dieser Ausführungsform durch einen in den Gehäusedeckel 8 integrierten Niederhalter 9 gebildet.

## Patentansprüche

1. Filteranordnung mit einem Gehäuse oder Gehäuseschacht (6, 7) und einem im wesentlichen plattenförmigen Filtereinsatz (1), der in das Gehäuse (6) einsetzbar bzw. in den Gehäuseschacht (6, 7) einführbar ist und eine im wesentlichen zick-zack-förmig gefaltete Filterbahn (2) aus einem Filterwerkstoff, insbesondere Vliesstoff, umfasst, wobei in dem Gehäuse bzw, Gehäuseschacht (6, 7) Aufnahmen (5) zur Halterung und / oder Abdichtung der stirnseitigen Endabschnitte der Filterbahn (2) vorgesehen sind, **dadurch gekennzeichnet, dass** wenigstens einer der beiden stirnseitigen Endabschnitte der Filterbahn (2) als horizontaler Faltenauslauf (3) ausgebildet ist und die zugeordnete Aufnahme (5) eine V-förmige Öffnung (4) zum Einführen des horizontalen Faltenauslaufs (3) umfasst.

2. Filteranordnung nach Anspruch 1, **dadurch gekennzeichnet, dass** die Filterbahn (2) an beiden Endabschnitten mit einem horizontalen Faltenäuslauf (3) versehen ist.

3. Filteranordnung nach Anspruch 1 oder 2, **dadurch gekennzeichnet, dass** Abstand zwischen den V-förmigen Aufnahmeöffnungen (4) geringer ist als die Länge der Faltenbahn (2) mit horizontalem Faltenauslauf (3).

4. Filteranordnung nach einem der Ansprüche 1 bis 3, **dadurch gekennzeichnet, dass** der horizontale Faltenauslauf (3) an der Stirnseite der Filterbahn (2) mittig angeordnet sind.

5. Filteranordnung nach einem der Ansprüche 1 bis 3, **dadurch gekennzeichnet, dass** der horizontale Faltenauslauf (3) an der Stirnseite der Faltenbahn (2) im oberen oder unteren Bereich angeordnet ist.

6. Filteranordnung nach einem der Ansprüche 1 bis 5, **dadurch gekennzeichnet, dass** der horizontale Faltenauslauf (3) mittels eines aufgebrachten Streifens verstärkt ist.

7. Filteranordnung nach Anspruch 6, **dadurch gekennzeichnet, dass** der Streifen aus Vliesstoff besteht.

## Claims

1. Filter arrangement having a housing or housing shaft (6, 7) and having a substantially plate-shaped filter insert (1) which can be placed into the housing (6) or inserted into the housing shaft (6, 7) and comprises a filter web (2), which filter web (2) is folded substantially in a zig-zag shape and is composed of a filter material, in particular nonwoven fabric, with receptacles (5) for holding and/or sealing off the face-side end sections of the filter web (2) being provided in the housing or housing shaft (6, 7), **characterized in that** at least one of the two face-side end sections of the filter web (2) is formed as a horizontal fold run-out (3) and the assigned receptacle (5) comprises a V-shaped opening (4) for inserting the horizontal fold run-out (3).

2. Filter arrangement according to Claim 1, **characterized in that** the filter web (2) is provided at both end sections with a horizontal fold run-out (3).

3. Filter arrangement according to Claim 1 or 2, **characterized in that** the spacing between the V-shaped receptacle openings (4) is smaller than the length of the folded web (2) with the horizontal fold run-out (3).

4. Filter arrangement according to one of Claims 1 to 3, **characterized in that** the horizontal fold run-out (3) is arranged centrally on the face side of the filter web (2).

5. Filter arrangement according to one of Claims 1 to 3, **characterized in that** the horizontal fold run-out (3) is arranged on the face side of the folded web (2) in the upper or lower region.

6. Filter arrangement according to one of Claims 1 to 5, **characterized in that** the horizontal fold run-out (3) is reinforced by means of an attached strip.

7. Filter arrangement according to claim 6, **characterized in that** the strip is composed of nonwoven fabric.

## Revendications

1. Agencement de filtres, avec un carter ou un gaine de carter (6, 7) et une cartouche de filtrage (1), sensiblement en forme de plaque, qui est insérable dans le carter (6) ou dans la gaine de carter (6, 7) et comporte une bande de filtrage (2) sensiblement en forme de zigzag, en une matière de filtrage, notamment en non-tissé, des logements (5) étant prévus dans le carter ou la gaine de carter (6, 7) pour assurer la fixation et/ou l'étanchéité des sections d'extrémité côté frontal de la bande de filtrage (2), **caractérisé en ce qu'**au moins l'une des deux sections d'extrémité côté frontal de la bande de filtrage (2) est conçue sous la forme d'une terminaison horizontale plissée (3) et **en ce que** le logement (5) associé comprend une ouverture en forme de V (4), pour l'introduction de la terminaison horizontale plissée (3).

2. Agencement de filtres selon la revendication 1, **caractérisé en ce que** la bande de filtrage (2) est munie sur ses deux extrémités d'une terminaison horizontale plissée (3).

3. Agencement de filtres selon la revendication 1 ou 2, **caractérisé en ce que** la distance entre les ouvertures de logement en forme de V (4) est inférieure à la longueur de la bande plissée (2) avec une terminaison horizontale plissée (3).

4. Agencement de filtres selon l'une quelconque des revendications 1 à 3, **caractérisé en ce que** la terminaison horizontale plissée (3) est disposée au centre sur la face frontale de la bande de filtrage (2).

5. Agencement de filtres selon l'une quelconque des revendications 1 à 3, **caractérisé en ce que** la terminaison horizontale plissée (3) est disposée dans la région inférieure ou supérieure sur la face frontale de la bande plissée (2).

6. Agencement de filtres selon l'une quelconque des revendications 1 à 5, **caractérisé en ce que** la terminaison horizontale plissée (3) est renforcée au moyen d'une patte appliquée.

7. Agencement de filtres selon la revendication 6, **caractérisé en ce que** la bande est en non-tissé.
